# EUROPÄISCHE PATENTANMELDUNG

(11) **EP 3 046 225 A1**
(43) Veröffentlichungstag der Anmeldung: **20.07.2016**
(21) Anmeldenummer: 15151477.5
(22) Anmeldetag: 16.01.2015
(51) Int. Cl.: H02K 1/20, H02K 9/04, H02K 9/10, H02K 9/08

(54) **Elektrische rotierende Maschine mit einseitiger Kühlung und Verfahren zur einseitigen Kühlung**

(71) Anmelder: Siemens Aktiengesellschaft, 80333 München (DE)
(72) Erfinder: Seibicke, Frank, 14822 Borkheide (DE)

(57) **Zusammenfassung**

Die Erfindung betrifft eine elektrische rotierende Maschine aufweisend einen Stator (1) und eine Strömungsmaschine (7), welche zur einseitigen Kühlung der elektrischen rotierenden Maschine vorgesehen ist, wobei der Stator (1) ein Statorblechpaket (2), einen vorderen Statorwickelkopf (5a) und einen hinteren Statorwickelkopf (5b) aufweist, wobei das Statorblechpaket (2) in axiale Richtung verlaufende Kanäle (9a, 9b) aufweist, welche dafür vorgesehen sind, den hinteren Statorwickelkopf (5b) mit einem von einer Strömungsmaschine (7) generierten ersten Kühlluftstrom (13) zu kühlen. Um bei der einseitigen Belüftung die Kühlung, insbesondere im Hinblick auf eine gleichmäßige Temperaturverteilung, im Vergleich zum Stand der Technik zu verbessern, wird vorgeschlagen mindestens einen ersten Kanal (9a) dafür vorzusehen, einen von der Strömungsmaschine (7) generierten zweiten Kühlluftstrom (14) durch das Statorblechpaket (2) zum hinteren Statorwickelkopf (5b) zu führen, eine Luftführung (4), welche am Statorblechpaket (2) an der Seite des hinteren Statorwickelkopfes (5b) befestigt ist, dafür vorzusehen, den zweiten Kühlluftstrom (14) über den hinteren Statorwickelkopf (5b) umzuleiten, und mindestens einen zweiten Kanal (9b) dafür vorzusehen, den zweiten Kühlluftstrom (14) vom hinteren Ständerwickelkopf (5b) durch das Statorblechpaket (2) zurück zu führen.

## Beschreibung

Die Erfindung betrifft eine elektrische rotierende Maschine aufweisend einen Stator und eine Strömungsmaschine, welche zur einseitigen Kühlung der elektrischen rotierenden Maschine vorgesehen ist, wobei der Stator ein Statorblechpaket, einen vorderen Statorwickelkopf und einen hinteren Statorwickelkopf aufweist, wobei das Statorblechpaket in axiale Richtung verlaufende Kanäle aufweist, welche dafür vorgesehen sind, den hinteren Statorwickelkopf mit einem von einer Strömungsmaschine generierten ersten Kühlluftstrom zu kühlen.

Die Erfindung liegt auf dem Gebiet der elektrischen Großmaschinen. Eine derartige Großmaschine, insbesondere ein Ringmotor wie er für getriebelose Zementrohrmühlen oder auch für Rohrmühlen zur Verkleinerung von Kupfererz eingesetzt wird, muss für Kühlzwecke wegen der geringen Motordrehzahl fremdbelüftet werden. Hierzu wird die Kühlluft entweder über Filter aus der Umgebung angesaugt oder im Umlauf über Luft-WasserKühler rückgekühlt. Der Kühlluftstrom muss dabei mit einer oder mehr getrennt vom Ringmotor angetriebenen Strömungsmaschinen, welche einen Lüfter aufweisen, durch unterschiedliche Kanäle den Motor gedrückt werden.

Einseitig belüftete elektrische Maschinen, insbesondere Großmaschinen mit einer Leistung von mehr als 10 Megawatt und einem Durchmesser von mehr als 5 Metern wie Ringmotoren, haben zumeist einen einfacheren konstruktiven Aufwand hinsichtlich der Lüftführung. Aufgrund der Luftaufheizung über die axiale Länge der Maschine verschlechtert sich aber mit steigender axialer Länge der Maschine, was einer Verlängerung des Kühlwegs entspricht, die Kühlwirkung. Diese Maschinen weisen einen Temperaturgradienten, auch Temperaturgefälle genannt, auf, welches die Nutzung einschränken und thermische Spannungen verursachen kann.

Das Prinzip einseitig belüfteter Maschinen kann nur bis zu einer begrenzten Baulänge angewendet werden. Danach muss auf andere, beispielsweise eine zweiseitige Belüftung, übergegangen werden. Diese erfordert mehr Baulänge. Insbesondere bei Maschinen mit großen Durchmessern und großen Belüftungsquerschnitten muss zusätzlich der Kühlvolumenstrom erheblich erhöht werden, um annähernd gleiche Kühlbedingungen wie bei der einseitig belüfteten Maschine zu erhalten.

Aus JP 60151245 U1 ist ein eigenbelüftetes Kühlsystem bekannt in dem ein Ventilator die Kühlluft über Kanäle durch den Motor zieht.

Der Erfindung liegt die Aufgabe zugrunde, eine elektrische rotierende Maschine anzugeben, bei welcher eine einseitige Belüftung die Kühlung, insbesondere im Hinblick auf eine gleichmäßige Temperaturverteilung, im Vergleich zum Stand der Technik verbessert wird.

Diese Aufgabe wird erfindungsgemäß durch eine elektrische rotierende Maschine aufweisend einen Stator und eine Strömungsmaschine, welche zur einseitigen Kühlung der elektrischen rotierenden Maschine vorgesehen ist, wobei der Stator ein Statorblechpaket, einen vorderen Statorwickelkopf und einen hinteren Statorwickelkopf aufweist, wobei das Statorblechpaket in axiale Richtung verlaufende Kanäle aufweist, welche dafür vorgesehen sind, den hinteren Statorwickelkopf mit einem von einer Strömungsmaschine generierten ersten Kühlluftstrom zu kühlen, dadurch gelöst, dass mindestens ein erster Kanal dafür vorzusehen ist, einen von der Strömungsmaschine generierten zweiten Kühlluftstrom durch das Statorblechpaket zum hinteren Statorwickelkopf zu führen, eine Luftführung, welche am Statorblechpaket an der Seite des hinteren Statorwickelkopfes befestigt ist, dafür vorgesehen ist, den zweiten Kühlluftstrom über den hinteren Statorwickelkopf umzuleiten, und mindestens ein zweiter Kanal dafür vorgesehen ist, den zweiten Kühlluftstrom vom hinteren Ständerwickelkopf durch das Statorblechpaket zurück zu führen.

Weiterhin wird die Aufgabe erfindungsgemäß durch ein Verfahren zur einseitigen Kühlung mit mindestens einer derartigen elektrischen rotierenden Maschine gelöst.

Die Vorteile der erfindungsgemäßen Realisierung, insbesondere für Großmaschinen mit einer Leistung von mehr als 10 Megawatt und einem Durchmesser von mehr als 5 Metern, wie beispielsweise Ringmotoren, bestehen insbesondere darin, dass trotz einseitiger Kühlung die hinteren Wickelköpfe, durch die in axialer Richtung verlaufenden Kanäle für den Kühlluftstrom und die gezielte Umlenkung über die hinteren Wickelköpfe durch die Luftführung, nahezu unabhängig von der axialen Länge des Statorblechpakets gekühlt werden. Da sich der Kühlluftstrom durch das Statorblechpaket zum hinteren Statorwickelkopf hin aufwärmt, sich der rückwärtige Kühlluftstrom aber vom hinteren Statorwickelkopf weg nochmals erwärmt, wird der durch die einseitige Kühlung verursachte axiale Temperaturgradient auf dem Statorblechpaket, insbesondere auf den Statorwicklungen, zumindest teilweise, kompensiert.

Bei einer weiteren vorteilhaften Ausgestaltung sind die in axialer Richtung verlaufenden Kanäle in radialer Richtung angeordnet. Dies ist besonders vorteilhaft, da so alle Wickelköpfe gleichmäßig gekühlt werden.

Bei einer bevorzugten Ausführungsform weist die elektrische rotierende Maschine einen Rotor auf, welcher einen hinteren Rotorwickelkopf aufweist, wobei die Strömungsmaschine dafür vorgesehen ist, den Rotor, das Statorblechpaket und/oder den hinteren Rotorwickelkopf durch einen Luftspalt zwischen dem Statorblechpaket und dem Rotor zu kühlen. Ein Vorteil dieser Ausführungsform ist, dass durch diese effiziente Nutzung der Strömungsmaschine der konstruktive Aufwand hinsichtlich der Lüftführung sinkt und dadurch eine gute Kostenposition erreicht wird.

In besonders vorteilhafter Weise sind mindestens je zwei in axialer Richtung angeordnete Radialschlitze, welche radial zwischen den in axialer Richtung verlaufenden Kanälen und dem Luftspalt angeordnet sind und diese miteinander verbinden, dafür vorgesehen, das Statorblechpaket, insbesondere die Statorwicklungen, und/oder den hinteren Rotorwickelkopf zu kühlen. Dies ist besonders vorteilhaft, da mit Hilfe der Radialschlitze der durch die einseitige Kühlung verursachte axiale Temperaturgradient auf dem Statorblechpaket, insbesondere bei den Statorwicklungen, zumindest teilweise, kompensiert wird. Außerdem wird so der hintere Rotorwickelkopf ohne zusätzliche Ventilatoren besser gekühlt, was dazu führt, dass die Komplexität sinkt und Kosten gespart werden.

In einer weiteren bevorzugten Ausgestaltung sind die in axialer Richtung angeordneten Radialschlitze im hinteren Drittel der der Strömungsmaschine abgewandten Seite des Statorblechpakets angeordnet und dafür vorgesehen, einen durch einseitige Kühlung verursachtes Temperaturgradienten zu kompensieren. Dies ist besonders vorteilhaft, da es so möglich ist eine elektrische rotierende Maschine mit einem Stator, der eine größere axiale Länge aufweist, mit einer einseitigen Kühlung zu bauen.

Bei einer vorteilhaften Ausführung wird der axiale Abstand zwischen den Radialschlitzen zur der Strömungsmaschine abgewandten Seite des Statorblechpakets hin geringer und ist dafür vorgesehen einen durch einseitige Kühlung verursachtes Temperaturgradienten zu kompensieren. Durch die Variation des Abstandes zwischen den Radialschlitzen ergibt sich ein zusätzlicher Freiheitsgrad den durch die einseitige Kühlung verursachten Temperaturgradienten zu kompensieren. Da sich die Luft bei einem langen Statorblechpaket durch die in axialer Richtung verlaufenden Kanäle zunehmend erwärmt ist es für eine gleichbleibende Kühlleistung erforderlich die axialen Abstände zwischen den Radialschlitzen zu verkleinern.

Bei einer weiteren bevorzugten Ausgestaltung ist mindestens ein Hilfsventilator an der Seite des hinteren Ständerwickelkopfes innerhalb der Luftführung angeordnet. Dies hat den Vorteil, dass sich mit minimalem Zusatzaufwand die Kühlleistung erhöht.

In einer vorteilhaften Ausführung weist die Luftführung mindestens eine Düse zum Ausblasen zumindest eines Teils des zweiten Kühlluftstroms auf, wobei der von der Düse ausgeblasene Teils des zweiten Kühlluftstroms zur Kühlung des hinteren Rotorwickelkopfes vorgesehen ist. Dies ist besonders vorteilhaft, da durch die mindestens eine Düse der hintere Rotorwickelkopf zusätzlich gekühlt wird.

Im Folgenden wird die Erfindung anhand der in den Figuren dargestellten Ausführungsbeispiele näher beschrieben und erläutert.

Es zeigen:
- FIG 1: einen Längsschnitt eines ersten Ausführungsbeispiels der elektrischen rotierenden Maschine,
- FIG 2: einen Schnitt entlang einer Linie II-II in FIG 1,
- FIG 3: einen Längsschnitt eines zweiten Ausführungsbeispiels der elektrischen rotierenden Maschine,
- FIG 4: ein Diagramm der Temperaturverteilung über die axiale Länge des Statorblechpakets mit und ohne Einfluss der Radialschlitze,
- FIG 5: einen Schnitt entlang einer Linie V-V in FIG 3 und
- FIG 6: einen Längsschnitt eines dritten Ausführungsbeispiels der elektrischen rotierenden Maschine.

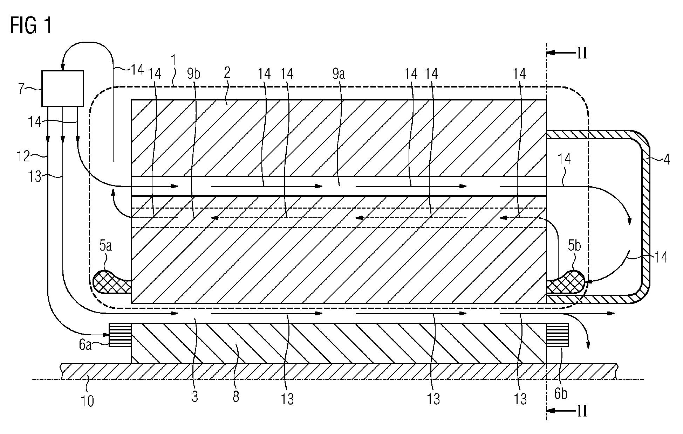

FIG 1 zeigt einen Längsschnitt eines ersten Ausführungsbeispiels der elektrischen rotierenden Maschine, welcher in axialer Richtung rotationssymmetrisch ist, wobei nur der obere Teil der Maschine dargestellt ist. Eine derartige Maschine, insbesondere ein Motor, hat eine Leistung von mehr als 10 Megawatt und einem Durchmesser von mehr als 5 Metern. Die elektrische rotierende Maschine weist einen Stator 1 auf, welcher ein Statorblechpaket 2, einen vorderen Statorwickelkopf 5a und einen hinteren Statorwickelkopf 5a aufweist. Weiterhin weist die elektrische rotierende Maschine einen Rotor 8 mit einem vorderen Rotorwickelkopf 6a und einem hinteren Rotorwickelkopf 6b und eine Welle 10 auf. Eine Strömungsmaschine 7 generiert eine, insbesondere drückende, Kühlluftströmung 12, 13, 14 mit dessen Hilfe die Maschine einseitig gekühlt wird. Während der vordere Rotorwickelkopf 6a und der vordere Statorwickelkopf 5a mit Hilfe eines dritten Kühlluftstroms 12 direkt gekühlt werden, verläuft ein erster Kühlluftstrom 13 von der Druckseite der Strömungsmaschine 7 durch einen Luftspalt 3 zwischen dem Statorblechpaket 2 und dem Rotor 8 um den hinteren Rotorwickelkopf 6b zu kühlen. Weiterhin werden die Wicklungen des Statorblechpakets 2 und des Rotors 8 durch den erste Kühlluftstrom 13 von einer Seite gekühlt. Ein zweiter Kühlluftstrom 14 kühlt das Statorbleckpaket 2 mit den Statorwicklungen sowie die hinteren Statorwickelköpfe 5b durch in axiale Richtung verlaufende Lüftungskanäle 9a, 9b, welche radial im Statorblechpaket um die Rotationsachse herum angeordnet sind, und eine Luftumlenkung 4, welche am Statorblechpaket 2 an der Seite des hinteren Statorwickelkopfes 5b befestigt ist und den Bereich um den hinteren Statorwickelkopf 6b und die in axiale Richtung verlaufenden Lüftungskanäle 9a, 9b abschließt. Hierbei fließt der zweite Kühlluftstrom 14 in mindestens einem ersten Kanal 9a durch das Statorblechpaket 2 zum hinteren Statorwickelkopf 5b wo der Kühlluftstrom 14 durch die Luftführung 4 über den hinteren Statorwickelkopf umgeleitet wird, und wird dann von der Luftführung 4 in mindestens einen zweiten Kanal 9b vom hinteren Ständerwickelkopf 5b durch das Statorblechpaket 2 zur Saugseite der Strömungsmaschine 7 zurückgeführt.

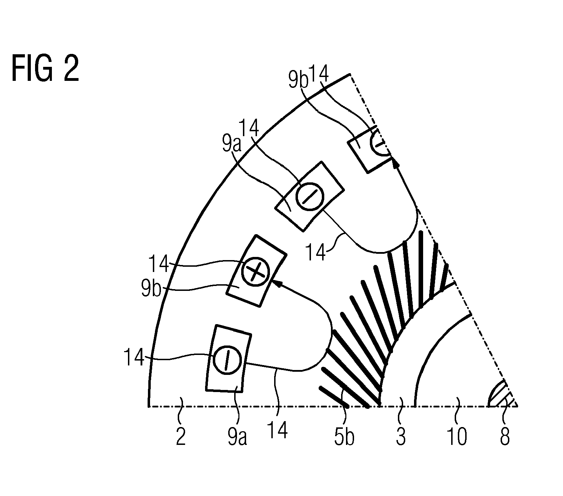

FIG 2 zeigt einen Querschnitt der elektrischen rotierenden Maschine entlang der Linie II-II in FIG 1. Neben dem schemenhaft dargestellten Rotor 8 und der Welle 10 sind der Luftspalt 3 zwischen Statorblechpaket 2 und Rotor 8, die hinteren Statorwickelköpfe 5b und die Lüftungskanäle 9a, 9b zu sehen. Auf die Darstellung der hinteren Rotorwickelköpfe 6b, der Rotorwicklungen und der Statorwicklungen wurde aus Gründen der Übersichtlichkeit verzichtet. Die Darstellung zeigt, dass die Lüftungskanäle 9a, 9b radial um die axial verlaufende Rotationsachse angeordnet sind, wobei in dieser exemplarischen Ausgestaltung der Kühlluftstrom 14 aus einem ersten Lüftungskanal 9a heraus und über die hinteren Wickelköpfe 5b strömt, während er über einen benachbarten zweiten Lüftungskanal 9b zurückströmt.

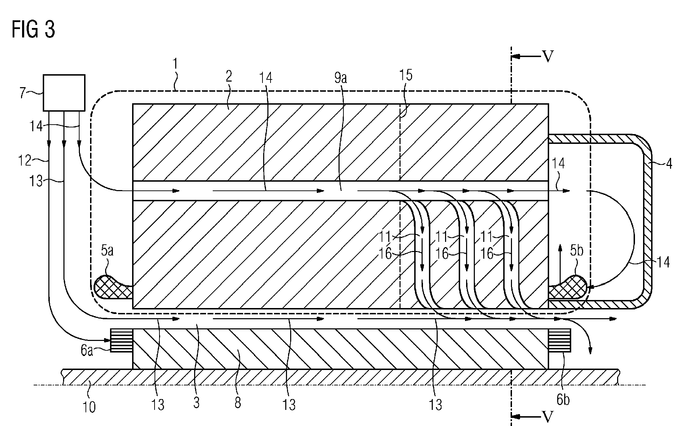

FIG 3 zeigt einen Längsschnitt eines zweiten Ausführungsbeispiels der elektrischen rotierenden Maschine, wobei zusätzlich in axialer Richtung angeordnete Radialschlitze 11 einen Teil des zweiten Kühlluftstroms 14, welcher einen Kühlluftstrom 16 durch die Radialschlitze 11 bildet, von einem ersten Kanal 9a durch das Statorblechpaket 2 in den Luftspalt 3 umleiten. So werden die hinteren Rotorwickelköpfe 6b und das Statorblechpaket 2, insbesondere der der Strömungsmaschine 7 abgewandte hintere Teil, beispielsweise das hinteren Drittel 15 des Statorblechpakets 2, zusätzlich vom Kühlluftstrom 16 der Radialschlitze 11 gekühlt.

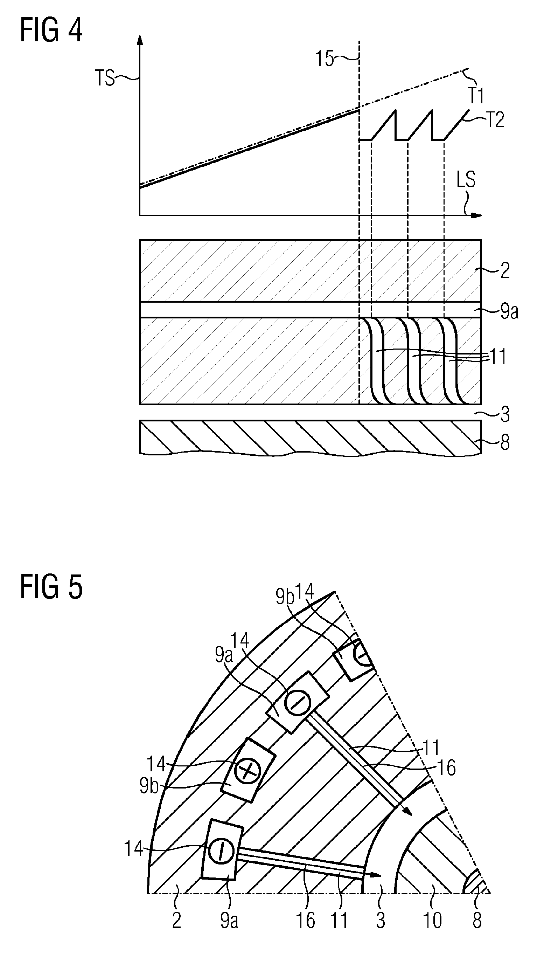

FIG 4 zeigt ein Diagramm der Temperaturverteilung TS über die axiale Länge LS des Statorblechpakets 2 mit und ohne Einfluss des Kühlluftstroms 16 durch die Radialschlitze 11. Die Radialschlitze sind, wie oben beschrieben, im hinteren Drittel 15 des Statorblechpakets 2 angeordnet. Es sind exemplarisch drei Radialschlitze 11 abgebildet. Die Temperatur T1 auf dem Statorblechpaket 2 ohne Radialschlitze steigt mit zunehmender axialer Länge LS des Statorblechpakets 2 stetig an. Die Temperatur T2 auf dem Statorblechpaket 2 mit Radialschlitzen sinkt an der Position der Radialschlitze 11 durch die Kühlung des Kühlluftstroms 16 ab, sodass die Temperatur T2 im hinteren Drittel 15 des Statorblechpakets 2 signifikant unter der Temperatur T1 liegt. Weiterhin bleibt die Temperatur T2, mit gewissen Schwankungen, die von der Anzahl der Radialschlitze 11 abhängen, im hinteren Drittel 15 des Statorblechpakets 2 näherungsweise konstant.

FIG 5 zeigt einen Querschnitt der elektrischen rotierenden Maschine entlang der Linie V-V in FIG 3. Die Darstellung zeigt zusätzlich zu den Lüftungskanälen 9a, 9b, welche radial um die axial verlaufende Rotationsachse angeordnet sind, die oben beschriebenen Radialschlitze 11, welche einen ersten Kanal 9a mit dem Luftspalt 3 zwischen dem Statorblechpaket 2 und dem Rotor 8 verbinden. Auf die Darstellung der Statorwicklungen und der Rotorwicklungen wurde aus Gründen der Übersichtlichkeit verzichtet.

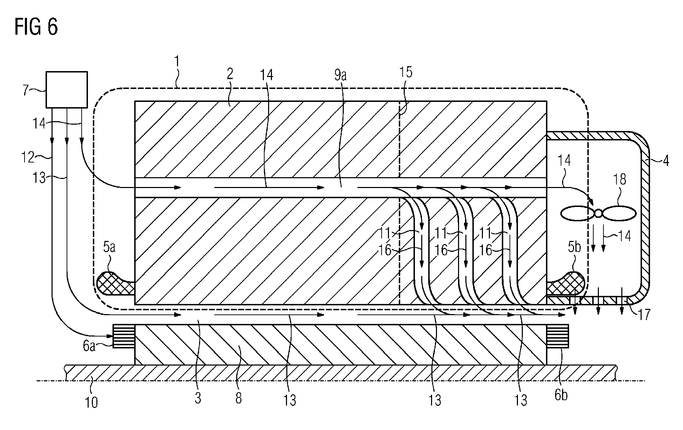

FIG 6 zeigt einen Längsschnitt eines dritten Ausführungsbeispiels der elektrischen rotierenden Maschine, wobei die Luftführung Düsen 17 zum Ausblasen von zumindest einem Teils des zweiten Kühlluftstroms 14, welcher über die hinteren Statorwickelköpfe 5b geleitet wird, aufweist. Der von der Düse ausgeblasene Teils des zweiten Kühlluftstroms 14 kühlt den hinteren Rotorwickelkopf 6b zusätzlich zum ersten Kühlluftstrom 13. Ein Hilfsventilator 18 ist innerhalb der Luftführung 4 angeordnet und verbessert nochmal die Kühlung durch den zweiten Kühlluftstrom 14 auf der der Strömungsmaschine 7 abgewandten Seite des Statorblechpakets 2.

Die Erfindung betrifft eine elektrische rotierende Maschine aufweisend einen Stator 1 und eine Strömungsmaschine 7, welche zur einseitigen Kühlung der elektrischen rotierenden Maschine vorgesehen ist, wobei der Stator 1 ein Statorblechpaket 2, einen vorderen Statorwickelkopf 5a und einen hinteren Statorwickelkopf 5b aufweist, wobei das Statorblechpaket 2 in axiale Richtung verlaufende Kanäle 9a, 9b aufweist, welche dafür vorgesehen sind, den hinteren Statorwickelkopf 5b mit einem von einer Strömungsmaschine 7 generierten ersten Kühlluftstrom 13 zu kühlen. Um bei der einseitigen Belüftung die Kühlung, insbesondere im Hinblick auf eine gleichmäßige Temperaturverteilung, im Vergleich zum Stand der Technik zu verbessern, wird vorgeschlagen mindestens einen ersten Kanal 9a dafür vorzusehen, einen von der Strömungsmaschine 7 generierten zweiten Kühlluftstrom 14 durch das Statorblechpaket 2 zum hinteren Statorwickelkopf 5b zu führen, eine Luftführung 4, welche am Statorblechpaket 2 an der Seite des hinteren Statorwickelkopfes 5b befestigt ist, dafür vorzusehen, den zweiten Kühlluftstrom 14 über den hinteren Statorwickelkopf 5b umzuleiten, und mindestens einen zweiten Kanal 9b dafür vorzusehen, den zweiten Kühlluftstrom 14 vom hinteren Ständerwickelkopf 5b durch das Statorblechpaket 2 zurück zu führen.

## Patentansprüche

1. Elektrische rotierende Maschine aufweisend einen Stator (1) und eine Strömungsmaschine (7), welche zur einseitigen Kühlung der elektrischen rotierenden Maschine vorgesehen ist, wobei der Stator (1) ein Statorblechpaket (2), einen vorderen Statorwickelkopf (5a) und einen hinteren Statorwickelkopf (5b) aufweist, wobei das Statorblechpaket (2) in axiale Richtung verlaufende Kanäle (9a, 9b) aufweist, welche dafür vorgesehen sind, den hinteren Statorwickelkopf (5b) mit einem von einer Strömungsmaschine (7) generierten ersten Kühlluftstrom (13) zu kühlen, **dadurch gekennzeichnet,**
- **dass** mindestens ein erster Kanal (9a) dafür vorgesehen ist, einen von der Strömungsmaschine (7) generierten zweiten Kühlluftstrom (14) durch das Statorblechpaket (2) zum hinteren Statorwickelkopf (5b) zu führen,
- **dass** eine Luftführung (4), welche am Statorblechpaket (2) an der Seite des hinteren Statorwickelkopfes (5b) befestigt ist, dafür vorgesehen ist, den zweiten Kühlluftstrom (14) über den hinteren Statorwickelkopf (5b) umzuleiten und
- **dass** mindestens ein zweiter Kanal (9b) dafür vorgesehen ist, den zweiten Kühlluftstrom (14) vom hinteren Ständerwickelkopf (5b) durch das Statorblechpaket (2) zurück zu führen.

2. Elektrische rotierende Maschine nach Anspruch 1,
**dadurch gekennzeichnet, dass** die in axialer Richtung verlaufenden Kanäle (9a, 9b) in radialer Richtung angeordnet sind.

3. Elektrische rotierende Maschine nach Anspruch 1 oder 2,
**dadurch gekennzeichnet, dass** die elektrische rotierende Maschine einen Rotor (8) aufweist, welcher einen hinteren Rotorwickelkopf (6b) aufweist, wobei die Strömungsmaschine (7) dafür vorgesehen ist, den Rotor (8), das Statorblechpaket (2) und/oder den hinteren Rotorwickelkopf (6b) durch einen Luftspalt (3) zwischen dem Statorblechpaket (2) und dem Rotor (8) zu kühlen.

4. Elektrische rotierende Maschine nach einem der Ansprüche 1 bis 3,
**dadurch gekennzeichnet, dass** mindestens je zwei in axialer Richtung angeordnete Radialschlitze (11), welche radial zwischen den in axialer Richtung verlaufenden Kanälen (9a, 9b) und dem Luftspalt (3) angeordnet sind und diese miteinander verbinden, dafür vorgesehen sind, das Statorblechpaket (2), insbesondere die Statorwicklungen, und/oder den hinteren Rotorwickelkopf (6b) zu kühlen.

5. Elektrische rotierende Maschine nach Anspruch 4,
**dadurch gekennzeichnet, dass** die in axialer Richtung angeordneten Radialschlitze (11) im hinteren Drittel (15) der der Strömungsmaschine (7) abgewandten Seite des Statorblechpakets (2) angeordnet sind und dafür vorgesehen sind, einen durch einseitige Kühlung verursachtes Temperaturgradienten zu kompensieren.

6. Elektrische rotierende Maschine nach Anspruch 4 oder 5,
**dadurch gekennzeichnet, dass** der axiale Abstand zwischen den Radialschlitzen (11) zur der Strömungsmaschine (7) abgewandten Seite des Statorblechpakets (2) hin geringer wird und dafür vorgesehen ist einen durch einseitige Kühlung verursachtes Temperaturgradienten zu kompensieren.

7. Elektrische rotierende Maschine nach einem der vorherigen Ansprüche,
**dadurch gekennzeichnet, dass** mindestens ein Hilfsventilator (18) an der Seite des hinteren Ständerwickelkopfes (5b) innerhalb der Luftführung (4) angeordnet ist.

8. Elektrische rotierende Maschine nach einem der vorherigen Ansprüche,
**dadurch gekennzeichnet, dass** die Luftführung mindestens eine Düse (17) zum Ausblasen zumindest eines Teils des zweiten Kühlluftstroms (14) aufweist, wobei der von der Düse ausgeblasene Teil des zweiten Kühlluftstroms (14) zur Kühlung des hinteren Rotorwickelkopfes (6b) vorgesehen ist.

9. Verfahren zur einseitigen Kühlung mit mindestens einer elektrischen rotierenden Maschine nach einem der Ansprüche 1 bis 8.

10. Verfahren nach Anspruch 9,
**dadurch gekennzeichnet, dass** der hintere Statorwickelkopf (5b) durch den von der Strömungsmaschine (7) generierten über mehrere in axialer Richtung durch das Statorblechpaket (2) verlaufende Kanäle (9a, 9b) geleiteten und von der Luftführung (4) umgelenkten zweiten Kühlluftstrom (14) gekühlt wird.

11. Verfahren nach Anspruch 9 oder 10,
**dadurch gekennzeichnet, dass** das Statorblechpaket (2) durch den von der Strömungsmaschine (7) generierten zweiten Kühlluftstrom (14) über mehrere in axialer Richtung durch das Statorblechpaket (2) verlaufende Kanäle (9a, 9b), welche in radialer Richtung angeordnet sind, und durch Radialschlitze (11), welche im hinteren Drittel (15) der der Strömungsmaschine (7) abgewandten Seite des Statorblechpakets (2) angeordnete sind, gleichmäßig gekühlt wird.
